# EUROPEAN PATENT SPECIFICATION

(11) **EP 3 915 863 B1**
(45) Date of publication and mention of the grant of the patent: **06.11.2024**
(21) Application number: 20745637.7
(22) Date of filing: 21.01.2020
(51) Int. Cl.: B62M 6/50, B62J 45/40, B62M 6/45, B62J 45/412, B62J 45/413, B62M 6/55

(54) **BICYCLE CONTROL DEVICE, MOTOR UNIT, DRIVE UNIT, ELECTRIC BICYCLE, AND PROGRAM**
FAHRRADSTEUERUNGSVORRICHTUNG, MOTOREINHEIT, ANTRIEBSEINHEIT, ELEKTRISCHES FAHRRAD UND PROGRAMM
DISPOSITIF DE COMMANDE DE BICYCLETTE, UNITÉ DE MOTEUR, UNITÉ D'ENTRAÎNEMENT, BICYCLETTE ÉLECTRIQUE ET PROGRAMME

(30) Priority: 23.01.2019 JP 2019009549
(43) Date of publication of application: 01.12.2021
(73) Proprietor: Panasonic Intellectual Property Management Co., Ltd., Osaka-shi, Osaka 540-6207 (JP)
(72) Inventor: YOSHIMURA, Masaya, Osaka-shi, Osaka 540-6207 (JP); SAWADA, Akinobu, Osaka-shi, Osaka 540-6207 (JP)
(74) Representative: Müller-Boré & Partner Patentanwälte PartG mbB
(86) International application number: PCT/JP2020/001925
(87) International publication number: WO 2020/153350

(56) References cited:
- EP-A1- 2 829 466
- EP-A2- 3 176 066
- WO-A1-2018/123162
- WO-A2-2015/017456
- JP-A- 2016 008 044
- JP-B2- S5 732 475
- KR-A- 20120 129 064

## Description

### Technical Field

The present disclosure generally relates to a bicycle control device, a motor unit, a drive unit, an electric bicycle, and a program. More particularly, the present disclosure relates to: a bicycle control device for use with a speed detection device and a rotation detection device; a motor unit including the bicycle control device; a drive unit including the motor unit; an electric bicycle including the bicycle control device; and a computer program for use with the speed detection device and the rotation detection device.

### Background Art

As typical bicycle control devices for detecting the speed of an electric bicycle, the following two types are known in the art, which will be hereinafter referred to as a "first exemplary bicycle control device" and a "second exemplary bicycle control device," respectively.

The first exemplary bicycle control device is configured to detect the speed of an electric bicycle based on a result of detection by a speed detection device. The speed detection device detects the rotating condition of wheels of the electric bicycle.

The second exemplary bicycle control device is configured to estimate the speed of an electric bicycle (see, for example, Patent Literature 1). When finding the result of detection by a vehicle speed sensor equal to or lower than a predetermined speed or finding the vehicle speed sensor operating improperly, the bicycle control device of Patent Literature 1 estimates the speed of the bicycle based on the rotational velocity of a motor, either the top gear or highest gear ratio of the transmission, and the circumferential length of the wheels.

The first exemplary bicycle control device detects the speed of the electric bicycle based on a result of detection by the speed detection device. Thus, the speed of the electric bicycle is updated every time the wheels make one rotation. Therefore, if the bicycle is traveling at low speeds, it is difficult for the bicycle control device of this type to detect the speed of the electric bicycle and control its power train with sufficient accuracy.

In the second exemplary bicycle control device, when the user changes the gear position, the rotational ratio changes. Thus, the second exemplary bicycle control device requires a sensor for determining the gear position of the transmission of the electric bicycle. Alternatively, since estimation needs to be made at the top gear (at the highest speed) of the transmission, it is difficult for the second exemplary bicycle control device to obtain sufficient auxiliary power when the gear position is lowered.

WO 2015/017456 A2 describes methods and systems for controlling power-assisted pedal electric bicycles. Each system incorporates at least one control map that defines the dynamic response of a reference model representing desired bicycle velocity in response to the measured pedal torque imparted by the rider. The reference model contains parameters defining the desired properties of the bicycle, including desired mass and drag properties. In one embodiment, the system implements a "pedal centric" control method wherein measured rider-actuated pedal torque and the reference model are used to determine a desired pedal velocity. In another embodiment, the system implements a "wheel centric" control method wherein measured rider-actuated pedal torque and the reference model are used to determine the desired velocity of the wheel coupled to the drive motor. A closed loop velocity servo controls the motor to minimize the error between the desired rotational velocity and actual rotational velocity.

This document discloses the following features of claim 1: A bicycle control device for use with a speed detection device and a rotation detection device, the speed detection device being configured to detect a rotating condition of a wheel of an electric bicycle, the rotation detection device being configured to detect a rotating condition of a power train, the power train being configured to rotate the wheel of the electric bicycle,the bicycle control device comprising: a rotational frequency detection unit configured to calculate, based on a result of detection by the rotation detection device, a rotational frequency of the power train.

KR 2012 0129064 A describes an electric bicycle comprising a pedal rotational speed detecting part, a driving wheel rotational speed detecting part, a motor, and a control part. The pedal rotational speed detecting part detects the rotational speed of a pedal. The driving wheel rotational speed detecting part detects the rotational speed of a driving wheel. The motor drives the driving wheel. The control part controls the motor by using control signals generated by the superposition of power control signals and speed control signals.

EP 2 829 466 A1 describes a motor control system of an electric bike, including: a driving speed detection unit detecting a driving speed; a wheel speed detection unit detecting a rotational speed of a wheel; and a motor driving control unit controlling a driving of a motor, in which the motor driving control unit receives values detected by the driving speed detection unit and the wheel speed detection unit to estimate a chain gear ratio so as to control a driving of the motor.

EP 3 176 066 A2 describes an electrically assisted bicycle having an electric motor which applies walk-push assisting torque to a rear wheel of the bicycle when a rider propels the bicycle by pushing it while walking, a motor control module configured to execute a first mode in which the electric motor applies no torque to the rear wheel, a second mode in which the electric motor applies to the rear wheel stay assisting torque which allows the electrically assisted bicycle to stay in a position where the rider wants to stay and a third mode in which the electric motor applies walk-push assisting torque to the rear wheel, wherein the first mode, the second mode and the third mode can be selected by using an operating unit which can be operated by the rider.

### Citation List

### Patent Literature

Patent Literature 1: JP 2016-7905 A

### Summary of Invention

In view of the foregoing background, it is therefore an object of the present disclosure to provide a bicycle control device, a motor unit, a drive unit, an electric bicycle, and a program, all of which are configured or designed to detect the speed of the electric bicycle highly accurately. This object is solved by the subject-matter according to the independent claims. Additional embodiments are defined in the dependent claims.

A bicycle control device according to an aspect of the present disclosure is designed to be used with a speed detection device and a rotation detection device. The speed detection device detects a rotating condition of a wheel of an electric bicycle. The rotation detection device detects a rotating condition of a power train at shorter detection intervals than detection intervals of the speed detection device. The power train rotates the wheel of the electric bicycle. The bicycle control device includes a rotational frequency detection unit, an angle of rotation detection unit, a gear position estimation unit, and a speed calculation unit. The rotational frequency detection unit calculates, based on a result of detection by the rotation detection device, a rotational frequency of the power train. The angle of rotation detection unit calculates, based on the result of detection by the rotation detection device, an angle of rotation of the power train when the wheel turns to a predetermined angle of rotation. The gear position estimation unit estimates, when the rotating condition of the wheel is detected by the speed detection device, a gear position of a transmission of the electric bicycle based on the angle of rotation calculated by the angle of rotation detection unit. The speed calculation unit calculates a speed of the electric bicycle based on the rotational frequency calculated by the rotational frequency detection unit and the gear position estimated by the gear position estimation unit.

A motor unit according to another aspect of the present disclosure includes: the bicycle control device described above; and a motor. The motor applies rotational power to the wheel of the electric bicycle.

A drive unit according to still another aspect of the present disclosure includes: the motor unit described above; and a battery. The battery supplies power to the motor unit.

An electric bicycle according to yet another aspect of the present disclosure includes the motor unit described above, a frame, and the wheel. To the frame, the motor unit is attached. The wheel is mounted on the frame and turns with motive power supplied from the motor unit.

A program according to yet another aspect of the present disclosure is designed to cause a computer for use with a speed detection device and a rotation detection device to function as a rotational frequency detection unit, an angle of rotation detection unit, a gear position estimation unit, and a speed calculation unit. The speed detection device detects a rotating condition of a wheel of an electric bicycle. The rotation detection device detects, at shorter detection intervals than detection intervals of the speed detection device, a rotating condition of a power train to rotate the wheel of the electric bicycle. The rotational frequency detection unit calculates, based on a result of detection by the rotation detection device, a rotational frequency of the power train. The angle of rotation detection unit calculates, based on the result of detection by the rotation detection device, an angle of rotation of the power train when the wheel turns to a predetermined angle of rotation. The gear position estimation unit estimates, when the rotating condition of the wheel is detected by the speed detection device, a gear position of a transmission of the electric bicycle based on the angle of rotation calculated by the angle of rotation detection unit. The speed calculation unit calculates a speed of the electric bicycle based on the rotational frequency calculated by the rotational frequency detection unit and the gear position estimated by the gear position estimation unit.

### Brief Description of Drawings

FIG. 1 is a block diagram of a bicycle control device, a motor unit, and a drive unit according to an exemplary embodiment;
FIG. 2 is a flowchart showing how the bicycle control device operates; and
FIG. 3 is a side view of an electric bicycle according to an exemplary embodiment.

### Description of Embodiments

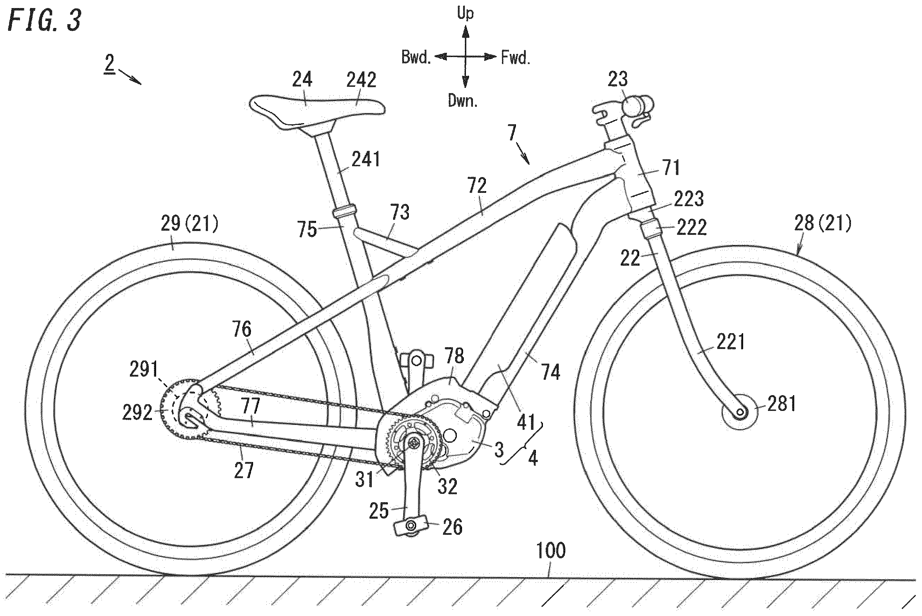

A bicycle control device 1, an electric bicycle 2, a motor unit 3, and a drive unit 4 according to an exemplary embodiment will be described with reference to the accompanying drawings. FIG. 3 to be referred to in the following description of embodiments is a schematic representation in which the ratio of the dimensions (including thicknesses) of respective constituent elements does not always reflect their actual dimensional ratio.

Also, in the following description, the traveling surface 100 is supposed to be a horizontal plane unless otherwise stated. Actually, however, the traveling surface 100 does not have to be a horizontal plane but may also be sloped with respect to the horizontal plane or a surface with unevenness.

Furthermore, in the following description, the direction in which the electric bicycle 2 travels is herein defined as a "forward direction" and the opposite direction thereof is herein defined as a "reverse direction." Also, the forward direction and the reverse direction are herein collectively defined as "forward/backward directions" and two opposite directions that are perpendicular to the forward/backward directions and aligned with a horizontal plane are herein defined as "rightward/leftward directions." Note that the definitions of these directions should not be construed as limiting the mode of use of the bicycle control device 1, the motor unit 3, the drive unit 4, and the electric bicycle 2. Furthermore, the arrows indicating the directions on the drawing are just shown there as an assistant to description and are insubstantial ones.

### (Embodiment)

### (1) Overall configuration for bicycle control device

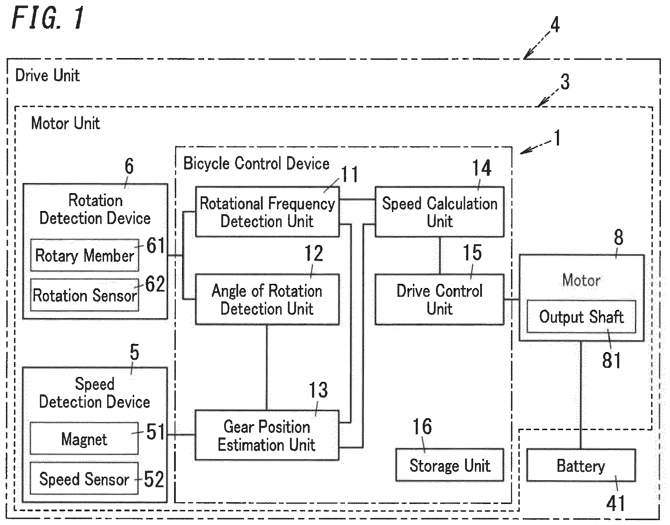

An overall configuration for a bicycle control device 1 according to an exemplary embodiment will be described with reference to FIG. 1.

As shown in FIG. 1, the bicycle control device 1 according to this embodiment includes a rotational frequency detection unit 11, an angle of rotation detection unit 12, a gear position estimation unit 13, a speed calculation unit 14, a drive control unit 15, and a storage unit 16.

The bicycle control device 1 may be implemented as, for example, a microprocessor including a processor and a memory. The processor performs the functions of the rotational frequency detection unit 11, the angle of rotation detection unit 12, the gear position estimation unit 13, the speed calculation unit 14, and the drive control unit 15 by executing a program stored in the memory. The program is designed to cause a computer used along with a speed detection device 5 and a rotation detection device 6 to perform the functions of the rotational frequency detection unit 11, the angle of rotation detection unit 12, the gear position estimation unit 13, the speed calculation unit 14, and the drive control unit 15.

The bicycle control device 1 may be used in, for example, an electric bicycle 2 (see FIG. 3). In particular, the bicycle control device 1 may be used along with the speed detection device 5 and rotation detection device 6 to be described later.

### (2) Electric bicycle

The electric bicycle 2 is a bicycle with the ability to travel on the traveling surface 100 with electro-motive power as shown in FIG. 3. In this embodiment, the electric bicycle 2 is implemented as an electric assist bicycle (also called an "electric assisted bicycle") designed to make a motor 8 (see FIG. 1) assist the user in his or her pedaling (where the force that the user applies for the purpose of pedaling will be hereinafter referred to as "pedaling force").

The electric bicycle 2 includes a motor unit 3 and a frame 7 as shown in FIG. 3. The electric bicycle 2 further includes a plurality of (e.g., two in the example illustrated in FIG. 3) wheels 21, a fork 22, handlebars 23, a saddle 24, a pair of crankarms 25, a pair of pedals 26, a power transmitter 27, and a battery 41. The motor unit 3 and the battery 41 together form a drive unit 4.

### (2.1) Wheels

The plurality of wheels 21 are members to support the frame 7 on the traveling surface 100. The electric bicycle 2 according to this embodiment includes, as the plurality of wheels 21, a front wheel 28 and a rear wheel 29. The front wheel 28 has a hub 281 at its center and the rear wheel 29 has a hub 291 at its center.

The front wheel 28 is the front one of the two wheels 21 that are arranged in the forward/backward directions. In this embodiment, the front wheel 28 is supported by a pair of legs 221 so as to be rotatable around an axle aligned with the rightward/leftward directions. In this embodiment, the front wheel 28 is a wheel to which no electro-motive power is transmitted from the motor unit 3.

The rear wheel 29 is the rear one of the two wheels 21 that are arranged in the forward/backward directions. In this embodiment, the rear wheel 29 is supported by two chain stays 77 so as to be rotatable around an axle aligned with the rightward/leftward directions.

The rear wheel 29 includes a rear sprocket 292, which is concentric with, and mounted integrally with, the hub 291. The rear sprocket 292 is coupled to a drive sprocket 32 of the motor unit 3 via the power transmitter 27. Thus, the motive power output from the motor unit 3 is transmitted to the rear wheel 29. The rear sprocket 292 may be made up of, for example, a plurality of sprockets.

### (2.2) Fork

The fork 22 supports the front wheel 28. The fork 22 includes a pair of legs 221, a crown 222, and a steering column 223. The crown 222 connects the respective upper ends of the pair of legs 221 together. The steering column 223 protrudes from the crown 222. The front wheel 28 is mounted rotatably onto the pair of legs 221 via an axle passed through the hub 281. The axis of rotation of the front wheel 28 is parallel to the traveling surface 100. The protrusion axis (longitudinal axis) of the steering column 223 extends from the crown 222 so as to slope diagonally up toward the rear end of the electric bicycle 2 and is inclined with respect to the traveling surface 100.

### (2.3) Handlebars

The handlebars 23 are attached to the upper end of the steering column 223 and fixed to the fork 22. The steering column 223 is passed through a head tube 71 of a frame 7 as will be described later and is mounted rotatably to the frame 7. The axis of rotation of the steering column 223 is generally parallel to the longitudinal axis of the steering column 223. This allows the handlebars 23 to turn the front wheel 28 around an axis aligned with the longitudinal axis of the steering column 223 as its axis of rotation.

### (2.4) Frame

The frame 7 is a framework on which the plurality of wheels 21, the fork 22, the handlebars 23, the saddle 24, the battery 41, and the motor unit 3 are mounted. In this embodiment, the frame 7 is made of an aluminum alloy including aluminum as a main component. However, this is only an example and should not be construed as limiting. Alternatively, the frame 7 may also be made of a metal such as iron, chromium molybdenum steel, high tensile strength steel, titanium, or magnesium, for example. Furthermore, the frame 7 does not have to be made of a metal but may also be made of carbon, wood, bamboo, or a fiber reinforced synthetic resin (such as carbon fiber reinforced plastics (CFRP)).

The frame 7 according to this embodiment includes a head tube 71, a top tube 72, a reinforcing tube 73, a down tube 74, a seat tube 75, a plurality of (only one of which is shown in FIG. 3) seat stays 76, a plurality of (e.g., two in this example) chain stays 77, and a bracket 78. As used herein, the "tubes" refer to elongate and hollow members. For example, the tubes according to the present disclosure may have a round cross section such as a circular or oval (e.g., elliptical) cross section but may also have a rectangular (including square), hexagonal, or octagonal cross section.

### (2.4.1) Head tube

The head tube 71 is a tube that supports the fork 22. The center axis of the head tube 71 is inclined with respect to the traveling surface 100 so as to slope diagonally up toward the rear end of the electric bicycle 2. The steering column 223 is passed through the head tube 71 such that the center axis of the head tube 71 is aligned with the center axis of the steering column 223. This allows the head tube 71 to rotatably support the steering column 223. In this embodiment, the axis of rotation of the steering column 223 is aligned with the enter axis of the head tube 71.

### (2.4.2) Top tube

The top tube 72 connects the head tube 71 to the seat tube 75. The front end along the longitudinal axis of the top tube 72 is connected to the head tube 71. The rear end along the longitudinal axis of the top tube 72 is connected to the seat tube 75. The longitudinal axis of the top tube 72 is inclined with respect to the traveling surface 100 so as to slope diagonally down toward the rear end of the electric bicycle 2. However, this is only an example and should not be construed as limiting. Alternatively, the top tube 72 does not have to be inclined with respect to the traveling surface 100. Optionally, the electric bicycle 2 according to the present disclosure does not have to include the top tube 72.

### (2.4.3) Reinforcing tube

The reinforcing tube 73 is a reinforcing member to reinforce a connecting portion between the seat tube 75 and the top tube 72. The reinforcing tube 73 connects the seat tube 75 to the top tube 72. Alternatively, the electric bicycle 2 according to the present disclosure may include no reinforcing tubes 73.

### (2.4.4) Seat tube

The seat tube 75 is a tube to hold the saddle 24. The lower end along the longitudinal axis of the seat tube 75 is connected to the bracket 78. The center axis of the seat tube 75 is inclined with respect to the traveling surface 100 so as to slope diagonally up from the lower end toward the rear end of the electric bicycle 2. The rear end along the longitudinal axis of the top tube 72 is connected to a middle portion of the seat tube 75. As used herein, the "middle portion of the seat tube 75" refers to a portion, excluding the lower and upper ends along the longitudinal axis, of the seat tube 75. Alternatively, according to the present disclosure, the top tube 72 may be connected to the upper end of the seat tube 75.

### (2.4.5) Down tube

The down tube 74 is a tube connecting the bracket 78 and the head tube 71 together. The front end along the longitudinal axis of the down tube 74 is connected to the head tube 71. The rear end along the longitudinal axis of the down tube 74 is connected to the bracket 78. The center axis of the down tube 74 is inclined with respect to the horizontal plane so as to slope diagonally up from the rear end along the longitudinal axis thereof toward the front end of the electric bicycle 2. In this embodiment, the battery 41 is attached removably to the down tube 74.

### (2.4.6) Chain stays

The plurality of chain stays 77 support the axle of the rear wheel 29. The front end along the longitudinal axis of each chain stay 77 is connected to the bracket 78. The rear end along the longitudinal axis of each chain stay 77 is connected to the rear end of an associated seat stay 76. The pair of chain stays 77 are spaced from each other in the rightward/leftward directions and the rear wheel 29 is mounted rotatably onto the respective rear ends of the pair of chain stays 77 via the axle passed through the hub 291. The axis of rotation of the rear wheel 29 is generally parallel to the traveling surface 100 and is aligned with the center axis of the axle that supports the rear wheel 29.

### (2.4.7) Seat stays

The plurality of seat stays 76 connect the chain stays 77 to the seat tube 75. In this embodiment, the rear end along the longitudinal axis of each seat stay 76 is connected to the rear end along the longitudinal axis of an associated chain stay 77. The front end along the longitudinal axis of each seat stay 76 is connected to a middle portion of the seat tube 75. In this embodiment, the pair of seat stays 76 branches from, and is integrated with, the top tube 72. However, this is only an example and should not be construed as limiting. Alternatively, the seat stays 76 and the top tube 72 may be provided separately from each other.

### (2.4.8) Bracket

The bracket 78 is a member to which the motor unit 3 is mounted. In this embodiment, the bracket 78 is formed in a generally C-shape when viewed from a direction perpendicular to both the upward/downward directions and the forward/backward directions. To the bracket 78, connected are the rear end along the longitudinal axis of the down tube 74, the lower end along the longitudinal axis of the seat tube 75, and the respective front ends along the longitudinal axis of the chain stays 77. This allows the rear end along the longitudinal axis of the down tube 74, the lower end along the longitudinal axis of the seat tube 75, and the respective front ends along the longitudinal axis of the chain stays 77 to be fixed to each other.

### (2.5) Saddle

The saddle 24 includes a seat post 241 and a portion 242 that allows the rider to be seated thereon. The seat post 241 is passed through the seat tube 75 to extend along the center axis of the seat tube 75. The seat post 241 protrudes downward from the portion 242 of the saddle 24 that allows the rider to be seated. In this embodiment, the seat post 241 is inclined with respect to the traveling surface 100 so as to slope diagonally down toward the front end of the electric bicycle 2. The seat post 241 is attached to the seat tube 75 so as to be movable along the center axis of the seat tube 75.

### (2.6) Pedals

Each of the pedals 26 is attached to one longitudinal end, opposite from the other end facing the bottom bracket axle 31, of an associated crankarm 25. The pedals 26 are attached rotatably to the crankarms 25. The axis of rotation of the pedals 26 is generally parallel to the axis of rotation of the bottom bracket axle 31.

### (2.7) Power transmitter

The power transmitter 27 transmits the motive power supplied from the motor unit 3 to at least one of the plurality of wheels 21. In this embodiment, the power transmitter 27 is implemented as a chain provided to transmit motive power between the drive sprocket 32 of the motor unit 3 and the rear sprocket 292 of the rear wheel 29. However, this is only an example and should not be construed as limiting. Alternatively, the power transmitter 27 may also be configured as a belt, a shaft, a wire, or a gear, for example.

### (3) Motor unit

As shown in FIG. 1, the motor unit 3 includes the bicycle control device 1, the speed detection device 5, the rotation detection device 6, the motor 8, the bottom bracket axle 31 (see FIG. 3), and the drive sprocket 32 (see FIG. 3). The motor unit 3 is a device configured to output drive assist power. As shown in FIG. 3, in this embodiment, the motor unit 3 transmits the pedaling force as human driving force, along with the drive assist power, to the rear wheel 29 via the power transmitter 27.

As shown in FIG. 3, to the bottom bracket axle 31 of the motor unit 3, attached are the pair of crankarms 25. The longitudinal axis of the crankarms 25 intersects (at right angles in the example illustrated in FIG. 3) with the axis of rotation of the bottom bracket axle 31. The pair of crankarms 25 are aligned with each other when viewed along the axis of rotation of the bottom bracket axle 31.

The drive sprocket 32 may be made up of a plurality of sprockets, for example. The drive sprocket 32 and the rear sprocket 292 together form a transmission (gearbox). The electric bicycle 2 may have its gear shifted by changing the gear position of this transmission. As used herein, the "gear position" in a bicycle with multiple gear stages refers to a combination of a sprocket in the drive sprocket 32 and a sprocket in the rear sprocket 292. For example, supposing the drive sprocket 32 has m sprockets and the rear sprocket 292 has n sprockets, the number of gear positions is m × n. For example, if the electric bicycle 2 has 20 gear stages, there are twenty gear positions.

### (3.1) Motor

The motor 8 shown in FIG. 1 is configured to apply rotational power to the wheel 21 of the electric bicycle 2 (see FIG. 3). The motor 8 is provided near the bottom bracket axle 31 of the electric bicycle 2 (see FIG. 3). The motor 8 is driven with the power supplied from the battery 41 to transmit the motive power to the bottom bracket axle 31.

### (3.2) Speed detection device

The speed detection device 5 detects the rotating condition of the wheel 21 of the electric bicycle 2 (see FIG. 3). In this embodiment, the speed detection device 5 detects the rotating condition of the rear wheel 29 of the electric bicycle 2 (see FIG. 3). As shown in FIG. 1, the speed detection device 5 includes a magnet 51 and a speed sensor 52. The magnet 51 is provided for the rear wheel 29 and rotates along with the rear wheel 29. Alternatively, the speed detection device 5 may detect the rotating condition of the front wheel 28 of the electric bicycle 2 (see FIG. 3). In that case, the magnet 51 is provided for the front wheel 28 and rotates along with the front wheel 28.

The speed sensor 52 is a hole IC for detecting the magnetic force of the magnet provided for the rear wheel 29. The speed sensor 52 may be provided, for example, for one of the chain stays 77 of the frame 7 (see FIG. 3). The speed sensor 52 detects the magnetic force of the magnet 51 provided for the rear wheel 29 by using a hole effect. The speed sensor 52 outputs an electrical signal based on the result of detection to the bicycle control device 1. In this embodiment, the speed detection device 5 detects the rotating condition of the rear wheel 29 once every time the rear wheel 29 makes one full rotation.

### (3.3) Rotation detection device

The rotation detection device 6 is a motor rotation detection device for detecting the rotating condition of the motor 8. As shown in FIG. 1, the rotation detection device 6 according to this embodiment includes a rotary member 61 and a rotation sensor 62.

The rotary member 61 is mounted on an outer peripheral surface of an output shaft 81 of the motor 8 and rotates along with the output shaft 81. Thus, the axis of rotation of the rotary member 61 is the same as the axis of rotation of the output shaft 81. The rotary member 61 may be implemented as either a member with a plurality of magnets which are embedded along the circumference of the rotary member 61 such that the magnetic polarities change alternately along the circumference or a magnet which is magnetized such that the magnetic polarities change alternately along the circumference.

The rotation sensor 62 is a hole IC for detecting the magnetic force of the magnet(s) of the rotary member 61. The rotation sensor 62 is provided to face the rotary member 61. The rotation sensor 62 outputs an electrical signal, representing a variation caused in magnetic field by the rotation of the rotary member 61, to the bicycle control device 1.

The rotation detection device 6 detects the rotating condition of the motor 8 at shorter detection intervals than detection intervals of the speed detection device 5. In other words, the rotation detection device 6 has a higher resolution than the speed detection device 5. For example, if the speed detection device 5 detects one rotating condition of the wheel 21, then the rotation detection device 6 detects the rotating condition of the motor 8 at an interval shorter than the time it takes for the wheel 21 to make one full rotation. Typically, while the wheel 21 makes one full rotation, the rotation detection device 6 detects the rotating condition of the motor 8 multiple times.

### (4) Drive unit

As shown in FIG. 3, the drive unit 4 includes the motor unit 3 and a battery 41.

The battery 41 supplies power to the motor unit 3. More specifically, the battery 41 supplies power to the motor 8 of the motor unit 3 (see FIG. 1). In addition, the battery 41 supplies power to not only the motor 8 but also a headlight and an ON/OFF switch of the motor 8 as well. The battery 41 is attached removably to the down tube 74. Alternatively, the battery 41 may also be arranged behind and along the seat tube 75.

### (5) Respective components of bicycle control device

Next, respective components of the bicycle control device 1 will be described with reference to FIG. 1.

### (5.1) Rotational frequency detection unit

The rotational frequency detection unit 11 calculates, based on the result of detection by the rotation detection device 6, a rotational frequency of the motor 8. As used herein, the rotational frequency of the motor 8 refers to the number of revolutions of the motor 8 per unit time (e.g., one second).

In addition, the rotational frequency detection unit 11 determines, based on the result of detection by the rotation detection device 6, whether or not the motor 8 is running. This enables determining whether the motor 8 is running or at a stop.

### (5.2) Angle of rotation detection unit

The angle of rotation detection unit 12 calculates, based on the result of detection by the rotation detection device 6, the angle of rotation of the motor 8 when the wheel 21 turns to a predetermined angle of rotation. The angle of rotation detection unit 12 detects the angle of rotation of the motor 8 every time the rotating condition of the motor 8 is detected by the rotation detection device 6. That is to say, the angle of rotation detection unit 12 detects the angle of rotation of the motor 8 at shorter detection intervals than detection intervals of the speed detection device 5. Information about the angle of rotation detected by the angle of rotation detection unit 12 is stored in the storage unit 16.

### (5.3) Gear position estimation unit

The gear position estimation unit 13 estimates (calculates), when the rotating condition of the wheel 21 (see FIG. 3) is detected by the speed detection device 5, the gear position of the transmission of the electric bicycle 2 based on the angle of rotation calculated by the angle of rotation detection unit 12. After having estimated the gear position of the transmission, the gear position estimation unit 13 updates the information, stored in the storage unit 16, about the gear position.

The gear position estimation unit 13 has the capability of checking the detection by the speed detection device 5. More specifically, the gear position estimation unit 13 checks the detection by the speed detection device 5 within a predetermined period of time since the last detection by the speed detection device 5. In a normal condition, the speed detection device 5 detects the rotating condition of the wheel 21 every time the wheel 21 makes one full rotation, as described above. Therefore, in the normal condition, the gear position estimation unit 13 acquires the result of detection by the speed detection device 5 every time the wheel 21 makes one full rotation. On the other hand, in an abnormal condition (e.g., when the magnet of the speed detection device 5 has come off the wheel 21), the gear position estimation unit 13 cannot acquire the result of detection by the speed detection device 5 even when the wheel 21 makes one full rotation.

On acquiring the result of detection by the speed detection device 5, the gear position estimation unit 13 estimates, based on the angle of rotation, measured by the angle of rotation detection unit 12, of the motor 8, the gear position of the transmission. The gear position estimation unit 13 estimates the gear position by reference to information about the correspondence between the angle of rotation and the gear position. The information about the correspondence is stored in advance in the storage unit 16. The gear position estimation unit 13 acquires, from the storage unit 16, not only information about the latest angle of rotation detected by the angle of rotation detection unit 12 but also information about the gear position corresponding to the latest angle of rotation, thereby estimating the gear position of the transmission.

This allows the gear position of the transmission to be estimated even without a sensor for detecting the actual gear position. In addition, even if the electric bicycle 2 is traveling at so low speeds that it takes some time for the wheel 21 to make one rotation, the speed calculation unit 14 (to be described later) may accurately estimate the speed of the electric bicycle 2 by using the angle of rotation of the motor 8 when the wheel 21 makes one full rotation.

Note that the gear position estimation unit 13 estimates the gear position of the transmission only when the speed of the electric bicycle 2 is equal to or lower than 6 kilometers per hour. Meanwhile, if the speed of the electric bicycle 2 is higher than 6 kilometers per hour, the gear position estimation unit 13 does not estimate the gear position as described above. More specifically, the gear position estimation unit 13 may selectively enable or disable the gear position estimation capability. When the speed of the electric bicycle 2 is equal to or lower than 6 kilometers per hour, the gear position estimation unit 13 enables the gear position estimation capability. On the other hand, when the speed of the electric bicycle 2 is higher than 6 kilometers per hour, the gear position estimation unit 13 disables the gear position estimation capability. Note that the threshold speed at or under which the gear position estimation capability is enabled does not have to be 6 kilometers per hour but may also be any other prescribed speed. Even so, the gear position estimation unit 13 enables the gear position estimation capability when finding the speed of the electric bicycle 2 equal to or lower than the prescribed speed but disenables the gear position estimation capability when finding the speed of the electric bicycle 2 higher than the prescribed speed.

Optionally, the gear position estimation unit 13 may enable the gear position estimation capability when a walk-a-bicycle button is pressed. Specifically, when finding the walk-a-bicycle button pressed, the gear position estimation unit 13 estimates the gear position of the transmission of the electric bicycle 2 based on the angle of rotation calculated by the angle of rotation detection unit 12.

If no detection is made by the speed detection device 5 within a predetermined period of time, the gear position estimation unit 13 checks the speed detection device 5 for malfunctions. More specifically, the gear position estimation unit 13 checks the speed detection device 5 for malfunctions by determining whether or not a rotational ratio, representing the angle of rotation of the motor 8 since the last detection made by the speed detection device 5, is equal to or greater than a prescribed value.

The prescribed value is a value defined based on the angle of rotation of the motor 8 while the wheel 21 makes one full rotation in a normal condition. That is to say, the prescribed value is a value defined based on the angle of rotation of the motor 8 since the last detection made by the speed detection device 5 in the normal condition. Specifically, the prescribed value is set at a value larger than the angle of rotation of the motor 8 in the normal condition. That is to say, the prescribed value is set at a value with some margin allowed with respect to the angle of rotation of the motor 8 in the normal condition.

When the rotational ratio is equal to or greater than the prescribed value, the magnet of the speed detection device 5 could drop to prevent the rotating condition of the wheel 21 from being detected. Therefore, when the rotational ratio is equal to or greater than the prescribed value, the gear position estimation unit 13 estimates (sets) the gear position of the transmission at the highest stage (i.e., top gear). Estimating the gear position of the transmission at the highest stage prevents the speed limit from being exceeded because the estimated speed is higher than the actual speed.

Meanwhile, if the rotational ratio is less than the prescribed value, then the wheel 21 may be turning so slowly that no detection has been made by the speed detection device 5 yet. Thus, the gear position estimation unit 13 continues checking detection by the speed detection device 5.

### (5.4) Speed calculation unit

The speed calculation unit 14 calculates the speed of the electric bicycle 2 based on the rotational frequency calculated by the rotational frequency detection unit 11 and the gear position estimated by the gear position estimation unit 13. As used herein, the speed of the electric bicycle 2 is the product of the circumferential length of the wheel 21, the rotational frequency of the motor 8, and the rotational ratio. The circumferential length of the wheel 21 is a known value, which is stored in advance in the storage unit 16. The rotational ratio is stored in advance in the storage unit 16 in association with the gear position of the transmission. The speed calculation unit 14 acquires information about the rotational ratio, corresponding to the gear position estimated by the gear position estimation unit 13, from the storage unit 16. In addition, the speed calculation unit 14 also acquires information about the circumferential length of the wheel 21 from the storage unit 16. The speed calculation unit 14 calculates, as the speed of the electric bicycle 2, the product of the wheel's 21 circumferential length acquired from the storage unit 16, the rotational frequency detected by the rotational frequency detection unit 11, and the rotational ratio acquired from the storage unit 16.

### (5.5) Drive control unit

The drive control unit 15 controls the motor 8. More specifically, the drive control unit 15 controls the motor 8 by calculating, based on the speed calculated by the speed calculation unit 14, a rotational velocity associated with the speed and outputting a drive control signal to the motor 8 such that the motor 8 rotates at the rotational velocity calculated. For example, the drive control unit 15 controls the motor 8 such that the motor 8 assists the user at the speed calculated by the speed calculation unit 14.

### (5.6) Storage unit

The storage unit 16 stores information about the circumferential length of the wheel 21 of the electric bicycle 2. In addition, the storage unit 16 also stores information about the correspondence between the rotational ratio and the gear position of the transmission. Moreover, the storage unit 16 further stores information about the gear position estimated by the gear position estimation unit 13. The information about the gear position estimated by the gear position estimation unit 13 is updated every time the gear position is estimated by the gear position estimation unit 13.

### (6) Operation of bicycle control device

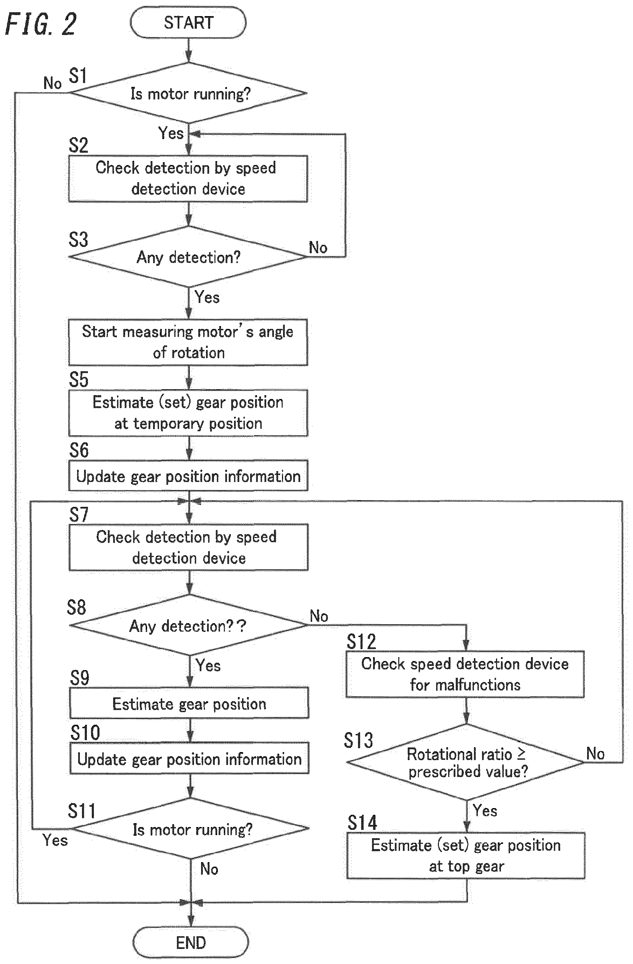

Next, it will be described with reference to FIG. 2 how the bicycle control device 1 performs the operation of estimating the gear position of the transmission (i.e., how the bicycle control device 1 carries out a bicycle control method).

First, the rotational frequency detection unit 11 determines, based on the result of detection by the rotation detection device 6, whether the motor 8 is running or not (in Step S1). If it turns out in Step S1 that the motor 8 is not running (if the answer is NO in Step S1), then the electric bicycle 2 is traveling downhill and the motor 8 is not running, and therefore, the operation of estimating the gear position of the transmission ends. On the other hand, if the rotational frequency detection unit 11 finds, in Step S1, the motor 8 running (if the answer is YES in Step S1), then the gear position estimation unit 13 checks whether there is any detection made by the speed detection device 5 (in Step S2).

If there is any detection made by the speed detection device 5 (if the answer is YES in Step S3), then the angle of rotation detection unit 12 starts measuring the angle of rotation of the motor 8 (in Step S4). The angle of rotation detection unit 12 measures, based on the result of detection by the rotation detection device 6, the angle of rotation of the motor 8 while the wheel 21 makes one full rotation. Thereafter, the gear position estimation unit 13 estimates (sets) the gear position of the transmission at a temporary position (in Step S5). Then, the gear position estimation unit 13 updates the gear position information to be stored in the storage unit 16 (in Step S6).

The gear position estimation unit 13 checks whether there is any detection made by the speed detection device 5 (in Step S7) within a predetermined period of time since the last detection made by the speed detection device 5 (in Step S3, for example). If there is any detection made by the speed detection device 5 within the predetermined period of time (if the answer is YES in Step S8), the gear position estimation unit 13 estimates the gear position of the transmission (in Step S9). Thereafter, the gear position estimation unit 13 updates the gear position information to be stored in the storage unit 16 (in Step S10).

Thereafter, if it turns out that the motor 8 is running (if the answer is YES in Step S11), the process goes back to the processing step S7. On the other hand, if it turns out that the motor 8 is at a stop (if the answer is NO in Step S11), then the operation of estimating the gear position of the transmission ends.

Meanwhile, if it turns out in Step S8 that there is no detection made by the speed detection device 5 within the predetermined period of time (if the answer is NO in Step S8), then the gear position estimation unit 13 checks the speed detection device 5 for malfunctions (in Step S 12). When finding the rotational ratio, representing the angle of rotation of the motor 8 since the last detection made by the speed detection device 5, equal to or greater than the prescribed value (if the answer is YES in Step S13), the gear position estimation unit 13 estimates (or sets) the gear position of the transmission at the highest stage (top gear) (in Step S14). Thereafter, the gear position estimation unit 13 updates the gear position information to be stored in the storage unit 16 (in Step S 15). On the other hand, if the rotational ratio turns out in Step S13 to be less than the prescribed value (if the answer is NO in Step S13), then the process goes back to the processing step S7, in which the gear position estimation unit 13 checks whether there is any detection made by the speed detection device 5.

### (7) Advantages

The bicycle control device 1 according to this embodiment calculates the angle of rotation of the motor 8 (power train) when the wheel 21 of the electric bicycle 2 turns to a predetermined angle of rotation and estimates the gear position of the transmission of the electric bicycle 2 based on the angle of rotation of the motor 8. This allows the bicycle control device 1 according to this embodiment to calculate the speed of the electric bicycle 2 accurately enough even without a sensor for detecting the gear position when the gear position of the transmission changes.

In addition, the bicycle control device 1 according to this embodiment calculates the angle of rotation of the motor 8 based on the result of detection of the rotation of the motor 8 having a higher resolution than any other part. This allows the speed of the electric bicycle 2 to be calculated even more accurately.

Furthermore, the bicycle control device 1 according to this embodiment controls the motor 8 by using the speed calculated based on the gear position estimated. This allows the motor 8 to be controlled accurately enough even without a sensor for detecting the gear position of the transmission.

Furthermore, the bicycle control device 1 according to this embodiment makes the gear position estimation unit 13 estimate the gear position of the transmission at least when the speed of the electric bicycle 2 is equal to or lower than 6 kilometers per hour. Thus, the bicycle control device 1 according to this embodiment achieves the advantage of calculating the speed of the electric bicycle 2 even more accurately, particularly when the electric bicycle 2 is traveling at low speeds.

### (Variations)

Next, variations of the exemplary embodiment described above will be enumerated one after another.

According to a first variation of the exemplary embodiment, the rotation detection device 6 does not have to detect the rotating condition of the motor 8. Alternatively, the rotation detection device 6 may detect the rotating condition of the power train to rotate the wheel 21 of the electric bicycle 2. The power train described above includes the rear sprocket 292, the drive sprocket 32, the bottom bracket axle 31, and a pulley. As in the first embodiment described above, the rotation detection device 6 detects the rotating condition of the power train at shorter detection intervals than detection intervals of the speed detection device 5. Then, the angle of rotation detection unit 12 calculates, based on the result of detection by the rotation detection device 6, the angle of rotation of the motor 8 when the wheel 21 turns to a predetermined angle of rotation.

If the power train is the bottom bracket axle 31, then the rotation detection device 6 is a bottom bracket axle rotation detection device for detecting the rotating condition of the bottom bracket axle 31. In that case, the rotation detection device 6 includes a rotation dog (target of detection) and a bottom bracket axle rotation sensor. The rotation detection device 6 outputs an electrical signal detected by the bottom bracket axle rotation sensor to the bicycle control device 1 and makes the bicycle control device 1 perform processing, thereby detecting the rotating condition of the bottom bracket axle 31.

The bottom bracket axle rotation sensor may be implemented as, for example, an optical sensor. The bottom bracket axle rotation sensor includes a light-emitting element (such as a light-emitting diode (LED) and a photosensitive element (such as a phototransistor). The light-emitting element and the photosensitive element are connected to the bicycle control device 1 so as to transmit and receive an electrical signal to/from the bicycle control device 1. The rotation dog is provided between the light-emitting element and the photosensitive element. The bottom bracket axle rotation sensor emits light from the light-emitting element toward the photosensitive element. The photosensitive element receives light transmitted through a light-transmitting portion.

Nevertheless, this is only an exemplary configuration for the rotation detection device 6. Alternatively, the rotation detection device 6 may use, for example, an annular ferrite magnet as the rotation dog and may use an electromagnetic rotation sensor for detecting a variation in magnetic field as the bottom bracket axle rotation sensor.

Note that when the angle of rotation of a member other than the motor 8 is used, the prescribed value varies according to the gear position of the transmission in Step S13 shown in FIG. 2. Thus, the prescribed value is supposed to be a value corresponding to the gear position estimated by the gear position estimation unit 13 most lately. More specifically, the prescribed value is set at a value larger than the rotational frequency of the motor 8 in a normal condition at the gear position estimated most lately by the gear position estimation unit 13.

According to a second variation of the exemplary embodiment, the gear position estimation unit 13 does not have to estimate the gear position of the transmission only when the speed of the electric bicycle 2 is equal to or lower than 6 kilometers per hour. Alternatively, the gear position estimation unit 13 may also estimate the gear position of the transmission even when the speed of the electric bicycle 2 is higher than 6 kilometers per hour. In other words, the gear position estimation unit 13 may estimate the gear position of the transmission at least when the speed of the electric bicycle 2 is equal to or lower than 6 kilometers per hour.

According to a third variation of the exemplary embodiment, the speed detection device 5 does not have to detect the rotating condition of the wheel 21 once, but may detect the rotating condition of the wheel 21 multiple times, every time the wheel 21 makes one full rotation. In the latter case, the speed detection device 5 includes a plurality of magnets. The plurality of magnets are provided at multiple different positions on the wheel 21. The speed detection device 5 may detect the rotating condition of the wheel 21 once every time the wheel 21 makes a half rotation or a quarter rotation. Still alternatively, the speed detection device 5 may detect the rotating condition of the wheel 21 once, every time the wheel 21 makes a number of rotations. For example, the speed detection device 5 may detect the rotating condition of the wheel 21 once, every time the wheel 21 makes two full rotations.

According to a fourth variation of the exemplary embodiment, the drive control unit 15 may acquire, from a predefined table, for example, a rotational velocity corresponding to the speed calculated by the speed calculation unit 14. In the fourth variation, the storage unit 16 stores, in the form of a table, for example, information about the correspondence between a plurality of speeds of the electric bicycle 2 and their corresponding rotational velocities of the motor 8. In the table of correspondence stored in the storage unit 16, a rotational velocity of the motor 8 is associated with each speed of the electric bicycle 2. The drive control unit 15 extracts, from the table of correspondence stored in the storage unit 16, a rotational velocity corresponding to the speed calculated by the speed calculation unit 14. Then, the drive control unit 15 outputs a drive control signal to the motor 8 such that the motor 8 rotates at the rotational velocity extracted, thereby controlling the motor 8.

In the exemplary embodiment described above, the motor unit 3 is implemented as a uniaxial drive unit. However, this is only an example and should not be construed as limiting. Alternatively, the motor unit 3 may also be implemented as a biaxial drive unit.

In the exemplary embodiment described above, the electric bicycle 2 is implemented as an electric assist bicycle designed to assist the user in pedaling with the motive power supplied from the motor 8. According to a variation of the exemplary embodiment, the electric bicycle 2 may also be a bicycle in which a human driving system and a motor driving system are provided independently of each other. In other words, the electric bicycle 2 may also be a bicycle in which a drive system to apply motive power to the wheels 21 by pedaling (i.e., the human driving system) and a drive system to apply motive power to the wheel 21 from the motor 8 (i.e., the motor drive system) are provided independently of each other (i.e., a bicycle which may travel with only the motive power supplied from the motor 8). In short, the electric bicycle 2 may be implemented as either an electric assist bicycle or a bicycle that may travel with only the motive power supplied from the motor 8.

The electric bicycle 2 according to this embodiment is implemented as a bicycle with one front wheel 28 and one rear wheel 29. According to a variation of the exemplary embodiment, the electric bicycle 2 may also be implemented as a tricycle having either one front wheel 28 and two rear wheels 29 or two front wheels 28 and one rear wheel 29, whichever is appropriate. Still alternatively, the electric bicycle 2 may also be implemented as a quadricycle having two front wheels 28 and two rear wheels 29.

The bicycle control device 1 according to any of these variations would achieve the same advantages as the bicycle control device 1 according to the exemplary embodiment.

Note that the embodiment and variations described above are only exemplary ones of various embodiments and variations of the present disclosure and should not be construed as limiting. Rather, the exemplary embodiment and variations may be readily modified in various manners depending on a design choice or any other factor without departing from the scope of the present disclosure.

### (Aspects)

The embodiment and its variations described above may be specific implementations of the following aspects of the present disclosure.

A bicycle control device (1) according to a first aspect is designed to be used with a speed detection device (5) and a rotation detection device (6). The speed detection device (5) detects a rotating condition of a wheel (21) of an electric bicycle (2). The rotation detection device (6) detects a rotating condition of a power train (including a motor 8; a rear sprocket 292; a drive sprocket 32; and a bottom bracket axle 31) at shorter detection intervals than detection intervals of the speed detection device (5). The power train rotates the wheel (21) of the electric bicycle (2). The bicycle control device (1) includes a rotational frequency detection unit (11), an angle of rotation detection unit (12), a gear position estimation unit (13), and a speed calculation unit (14). The rotational frequency detection unit (11) calculates, based on a result of detection by the rotation detection device (6), a rotational frequency of the power train. The angle of rotation detection unit (12) calculates, based on the result of detection by the rotation detection device (6), an angle of rotation of the power train when the wheel (21) turns to a predetermined angle of rotation. The gear position estimation unit (13) estimates, when the rotating condition of the wheel (21) is detected by the speed detection device (5), a gear position of a transmission (including the rear sprocket 292 and the drive sprocket 32) of the electric bicycle (2) based on the angle of rotation calculated by the angle of rotation detection unit (12). The speed calculation unit (14) calculates a speed of the electric bicycle (2) based on the rotational frequency calculated by the rotational frequency detection unit (11) and the gear position estimated by the gear position estimation unit (13).

The bicycle control device (1) according to the first aspect may calculate the speed of the electric bicycle (2) accurately enough even without a sensor for detecting the gear position when the gear position of the transmission (including the rear sprocket 292 and the drive sprocket 32) changes.

In a bicycle control device (1) according to a second aspect, which may be implemented in conjunction with the first aspect, the power train includes a motor (8). The angle of rotation detection unit (12) calculates, based on the result of detection by the rotation detection device (6), the angle of rotation of the motor (8) when the wheel (21) has the predetermined angle of rotation, as an angle of rotation of the power train.

The bicycle control device (1) according to the second aspect may calculate the speed of the electric bicycle (2) even more accurately.

A bicycle control device (1) according to a third aspect, which may be implemented in conjunction with the second aspect, further includes a drive control unit (15). The drive control unit (15) controls the motor (8) by calculating a rotational velocity associated with the speed calculated by the speed calculation unit (14) and by outputting a drive control signal to the motor (8) such that the motor (8) rotates at the rotational velocity thus calculated.

The bicycle control device (1) according to the third aspect may control the motor (8) accurately enough even without a sensor for detecting the gear position of the transmission (including the rear sprocket 292 and the drive sprocket 32).

A bicycle control device (1) according to a fourth aspect, which may be implemented in conjunction with the second aspect, further includes a drive control unit (15). The drive control unit (15) controls the motor (8) by outputting a drive control signal to the motor (8) such that the motor (8) rotates at a rotational velocity associated with the speed calculated by the speed calculation unit (14).

The bicycle control device (1) according to the fourth aspect may control the motor (8) accurately enough even without a sensor for detecting the gear position of the transmission (including the rear sprocket 292 and the drive sprocket 32).

A bicycle control device (1) according to a fifth aspect, which may be implemented in conjunction with the fourth aspect, further includes a storage unit (16). The storage unit (16) stores information about correspondence between each of a plurality of speeds of the electric bicycle (2) and an associated rotational velocity of the motor (8). The drive control unit (15) controls the motor (8) by extracting, by reference to the information about the correspondence as stored in the storage unit (16), the rotational velocity associated with the speed calculated by the speed calculation unit (14) and by outputting a drive control signal to the motor (8) such that the motor (8) rotates at the rotational velocity extracted.

In a bicycle control device (1) according to a sixth aspect, which may be implemented in conjunction with any one of the first to fifth aspects, the gear position estimation unit (13) estimates the gear position at least when the speed of the electric bicycle (2) is equal to or lower than 6 kilometers per hour.

The bicycle control device (1) according to the sixth aspect achieves the advantage of calculating the speed of the electric bicycle (2) even more accurately, particularly when the electric bicycle (2) is traveling at low speeds.

In a bicycle control device (1) according to a seventh aspect, which may be implemented in conjunction with any one of the first to sixth aspects, the gear position estimation unit (13) is configured to selectively enable or disable an estimation capability of estimating the gear position.

In a bicycle control device (1) according to an eighth aspect, which may be implemented in conjunction with the seventh aspect, the gear position estimation unit (13) enables the estimation capability when the speed of the electric bicycle (2) is equal to or lower than a prescribed speed and disables the estimation capability when the speed of the electric bicycle (2) is higher than the prescribed speed.

In a bicycle control device (1) according to a ninth aspect, which may be implemented in conjunction with the eighth aspect, the prescribed speed is 6 kilometers per hour.

In a bicycle control device (1) according to a tenth aspect, which may be implemented in conjunction with the seventh aspect, the gear position estimation unit (13) enables the estimation capability when finding a walk-a-bicycle button pressed.

A motor unit (3) according to an eleventh aspect includes: the bicycle control device (1) according to any one of the first to tenth aspects; and a motor (8). The motor (8) applies rotational power to the wheel (21) of the electric bicycle (2).

The motor unit (3) according to the eleventh aspect allows the bicycle control device (1) to calculate the speed of the electric bicycle (2) accurately enough even without a sensor for detecting the gear position when the gear position of the transmission (including the rear sprocket 292 and the drive sprocket 32) changes.

A drive unit (4) according to a twelfth aspect includes: the motor unit (3) according to the eleventh aspect; and a battery (41). The battery (41) supplies power to the motor unit (3).

The drive unit (4) according to the twelfth aspect allows the bicycle control device (1) to calculate the speed of the electric bicycle (2) accurately enough even without a sensor for detecting the gear position when the gear position of the transmission (including the rear sprocket 292 and the drive sprocket 32) changes.

An electric bicycle (2) according to a thirteenth aspect includes the motor unit (3) according to the eleventh aspect, a frame (7), and the wheel (21). To the frame (7), the motor unit (3) is attached. The wheel (21) is mounted on the frame (7) and turns with motive power supplied from the motor unit (3).

The electric bicycle (2) according to the thirteenth aspect allows the bicycle control device (1) to calculate the speed of the electric bicycle (2) accurately enough even without a sensor for detecting the gear position when the gear position of the transmission (including the rear sprocket 292 and the drive sprocket 32) changes.

A program according to a fourteenth aspect is designed to cause a computer for use with a speed detection device (5) and a rotation detection device (6) to function as a rotational frequency detection unit (11), an angle of rotation detection unit (12), a gear position estimation unit (13), and a speed calculation unit (14). The speed detection device (5) detects a rotating condition of a wheel (21) of an electric bicycle (2). The rotation detection device (6) detects, at shorter detection intervals than detection intervals of the speed detection device (5), a rotating condition of a power train (including a motor 8; a rear sprocket 292; a drive sprocket 32; and a bottom bracket axle 31) to rotate the wheel (21) of the electric bicycle (2). The rotational frequency detection unit (11) calculates, based on a result of detection by the rotation detection device (6), a rotational frequency of the power train. The angle of rotation detection unit (12) calculates, based on the result of detection by the rotation detection device (6), an angle of rotation of the power train when the wheel (21) turns to a predetermined angle of rotation. The gear position estimation unit (13) estimates, when the rotating condition of the wheel (21) is detected by the speed detection device (5), a gear position of a transmission (including the rear sprocket 292 and the drive sprocket 32) of the electric bicycle (2) based on the angle of rotation calculated by the angle of rotation detection unit (12). The speed calculation unit (14) calculates a speed of the electric bicycle (2) based on the rotational frequency calculated by the rotational frequency detection unit (11) and the gear position estimated by the gear position estimation unit (13).

The program according to the fourteenth aspect allows the speed of the electric bicycle (2) to be calculated accurately enough even without a sensor for detecting the gear position when the gear position of the transmission (including the rear sprocket 292 and the drive sprocket 32) changes.

### Reference Signs List

- 1: Bicycle Control Device
- 11: Rotational Frequency Detection Unit
- 12: Angle of Rotation Detection Unit
- 13: Gear Position Estimation Unit
- 14: Speed Calculation Unit
- 15: Drive Control Unit
- 2: Electric Bicycle
- 21: Wheel
- 292: Rear Sprocket (Power Train, Transmission)
- 3: Motor Unit
- 31: Bottom Bracket Axle (Power Train)
- 32: Drive Sprocket (Power Train, Transmission)
- 4: Drive Unit
- 41: Battery
- 5: Speed Detection Unit
- 6: Rotation Detection Unit
- 7: Frame
- 8: Motor (Power Train)

## Claims

1. A bicycle control device (1) for use with a speed detection device (5) and a rotation detection device (6), the speed detection device (5) being configured to detect a rotating condition of a wheel (21) of an electric bicycle (2), the rotation detection device (6) being configured to detect a rotating condition of a power train at shorter detection intervals than detection intervals of the speed detection device (5), the power train being configured to rotate the wheel (21) of the electric bicycle (2),
the bicycle control device (1) comprising:
a rotational frequency detection unit (11) configured to calculate, based on a result of detection by the rotation detection device (6), a rotational frequency of the power train;
an angle of rotation detection unit (12) configured to calculate, based on the result of detection by the rotation detection device (6), an angle of rotation of the power train when the wheel (21) turns to a predetermined angle of rotation;
a gear position estimation unit (13) configured to, when the rotating condition of the wheel (21) is detected by the speed detection device (5), estimate a gear position of a transmission of the electric bicycle (2) based on the angle of rotation calculated by the angle of rotation detection unit (12); and
a speed calculation unit (14) configured to calculate a speed of the electric bicycle (2) based on the rotational frequency calculated by the rotational frequency detection unit (11) and the gear position estimated by the gear position estimation unit (13).

2. The bicycle control device (1) of claim 1, wherein
the power train includes a motor (8), and
the angle of rotation detection unit (12) is configured to calculate, based on the result of detection by the rotation detection device (6), an angle of rotation of the motor (8) when the wheel (21) turns to the predetermined angle of rotation, as the angle of rotation of the power train.

3. The bicycle control device (1) of claim 2, further comprising a drive control unit (15) configured to control the motor (8) by calculating a rotational velocity associated with the speed calculated by the speed calculation unit (14) and by outputting a drive control signal to the motor (8) such that the motor (8) rotates at the rotational velocity thus calculated.

4. The bicycle control device (1) of claim 2, further comprising a drive control unit (15) configured to control the motor (8) by outputting a drive control signal to the motor (8) such that the motor (8) rotates at a rotational velocity associated with the speed calculated by the speed calculation unit (14).

5. The bicycle control device (1) of claim 4, further comprising a storage unit (16) configured to store information about correspondence between each of a plurality of speeds of the electric bicycle (2) and an associated rotational velocity of the motor (8), wherein
the drive control unit (15) is configured to control the motor (8) by extracting, by reference to the information about the correspondence as stored in the storage unit (16), the rotational velocity associated with the speed calculated by the speed calculation unit (14) and by outputting a drive control signal to the motor (8) such that the motor (8) rotates at the rotational velocity extracted.

6. The bicycle control device (1) of any one of claims 1 to 5, wherein
the gear position estimation unit (13) is configured to estimate the gear position at least when the speed of the electric bicycle (2) is equal to or lower than 6 kilometers per hour.

7. The bicycle control device (1) of any one of claims 1 to 6, wherein
the gear position estimation unit (13) is configured to selectively enable or disable an estimation capability of estimating the gear position.

8. The bicycle control device (1) of claim 7, wherein
the gear position estimation unit (13) is configured to enable the estimation capability when the speed of the electric bicycle (2) is equal to or lower than a prescribed speed and disable the estimation capability when the speed of the electric bicycle (2) is higher than the prescribed speed.

9. The bicycle control device (1) of claim 8, wherein
the prescribed speed is 6 kilometers per hour.

10. The bicycle control device (1) of claim 7, wherein
the gear position estimation unit (13) is configured to enable the estimation capability when finding a walk-a-bicycle button pressed.

11. A motor unit comprising:
the bicycle control device (1) of any one of claims 1 to 10; and
a motor (8) configured to apply rotational power to the wheel (21) of the electric bicycle (2).

12. A drive unit (4) comprising:
the motor unit (3) of claim 11; and
a battery (41) configured to supply power to the motor unit (3).

13. An electric bicycle (2) comprising:
the motor unit (3) of claim 11;
a frame (7) to which the motor unit (3) is attached; and
the wheel (21) mounted on the frame (7) and configured to rotate with motive power supplied from the motor unit (3).

14. A program designed to cause a computer for use with a speed detection device (5) configured to detect a rotating condition of a wheel (21) of an electric bicycle (2) and a rotation detection device (6) configured to detect, at shorter detection intervals than detection intervals of the speed detection device (5), a rotating condition of a power train configured to rotate the wheel (21) of the electric bicycle (2), to function as:
a rotational frequency detection unit (11) configured to calculate, based on a result of detection by the rotation detection device (6), a rotational frequency of the power train;
an angle of rotation detection unit (12) configured to calculate, based on the result of detection by the rotation detection device (6), an angle of rotation of the power train when the wheel (21) turns to a predetermined angle of rotation;
a gear position estimation unit (13) configured to, when the rotating condition of the wheel (21) is detected by the speed detection device (5), estimate a gear position of a transmission of the electric bicycle (2) based on the angle of rotation calculated by the angle of rotation detection unit (12); and
a speed calculation unit (14) configured to calculate a speed of the electric bicycle (2) based on the rotational frequency calculated by the rotational frequency detection unit (11) and the gear position estimated by the gear position estimation unit (13).

## Patentansprüche

1. Fahrradsteuer- bzw. -regelvorrichtung (1) zur Verwendung mit einer Geschwindigkeitsdetektionsvorrichtung (5) und einer Drehungsdetektionsvorrichtung (6), wobei die Geschwindigkeitsdetektionsvorrichtung (5) konfiguriert ist, einen Drehzustand eines Rades (21) eines Elektrofahrrads (2) zu detektieren, wobei die Drehungsdetektionsvorrichtung (6) konfiguriert ist, einen Drehzustand eines Antriebsstrangs in kürzeren Detektionsintervallen als den Detektionsintervallen der Geschwindigkeitsdetektionsvorrichtung (5) zu detektieren, wobei der Antriebsstrang konfiguriert ist, das Rad (21) des Elektrofahrrads (2) zu drehen, wobei die Fahrradsteuer- bzw. -regelvorrichtung (1) umfasst:
eine Drehfrequenzdetektionseinheit (11), die konfiguriert ist, basierend auf einem Detektionsergebnis durch die Drehungsdetektionsvorrichtung (6) eine Drehfrequenz des Antriebsstrangs zu berechnen;
eine Drehwinkeldetektionseinheit (12), die konfiguriert ist, basierend auf dem Detektionsergebnis durch die Drehungsdetektionsvorrichtung (6) einen Drehwinkel des Antriebsstrangs zu berechnen, wenn sich das Rad (21) um einen vorbestimmten Drehwinkel dreht;
eine Gangpositionsschätzeinheit (13), die konfiguriert ist, wenn der Drehzustand des Rades (21) durch die Geschwindigkeitsdetektionsvorrichtung (5) detektiert wird, eine Gangposition eines Getriebes des Elektrofahrrads (2) basierend auf dem durch die Drehwinkeldetektionseinheit (12) berechneten Drehwinkel zu schätzen; und
eine Geschwindigkeitsberechnungseinheit (14), die konfiguriert ist, eine Geschwindigkeit des Elektrofahrrads (2) basierend auf der durch die Drehfrequenzdetektionseinheit (11) berechneten Drehfrequenz und der durch die Gangpositionsschätzeinheit (13) geschätzten Gangposition zu berechnen.

2. Fahrradsteuer- bzw. -regelvorrichtung (1) nach Anspruch 1, wobei der Antriebsstrang einen Motor (8) enthält und
die Drehwinkeldetektionseinheit (12) konfiguriert ist, basierend auf dem Detektionsergebnis durch die Drehungsdetektionsvorrichtung (6) einen Drehwinkel des Motors (8), wenn sich das Rad (21) um den vorbestimmten Drehwinkel dreht, als den Drehwinkel des Antriebsstrangs zu berechnen.

3. Fahrradsteuer- bzw. -regelvorrichtung (1) nach Anspruch 2, ferner umfassend eine Antriebssteuer- bzw. -regeleinheit (15), die konfiguriert ist, den Motor (8) zu steuern bzw. zu regeln, indem sie eine Drehgeschwindigkeit berechnet, die mit der durch die Geschwindigkeitsberechnungseinheit (14) berechneten Geschwindigkeit verknüpft ist, und indem sie ein Antriebssteuer- bzw. - regelsignal an den Motor (8) ausgibt, sodass sich der Motor (8) mit der so berechneten Drehgeschwindigkeit dreht.

4. Fahrradsteuer- bzw. -regelvorrichtung (1) nach Anspruch 2, ferner umfassend eine Antriebssteuer- bzw. -regeleinheit (15), die konfiguriert ist, den Motor (8) zu steuern bzw. zu regeln, indem sie ein Antriebssteuer- bzw. -regelsignal an den Motor (8) ausgibt, sodass sich der Motor (8) mit einer Drehgeschwindigkeit dreht, die mit der durch die Geschwindigkeitsberechnungseinheit (14) berechneten Geschwindigkeit verknüpft ist.

5. Fahrradsteuer- bzw. -regelvorrichtung (1) nach Anspruch 4, ferner umfassend eine Speichereinheit (16), die konfiguriert ist, Informationen über eine Entsprechung zwischen jeder einer Mehrzahl von Geschwindigkeiten des Elektrofahrrads (2) und einer zugehörigen bzw. verknüpften Drehgeschwindigkeit des Motors (8) zu speichern, wobei
die Antriebssteuer- bzw. -regeleinheit (15) konfiguriert ist, den Motor (8) zu steuern bzw. zu regeln, indem sie unter Bezugnahme auf die in der Speichereinheit (16) gespeicherten Informationen über die Entsprechung die Drehgeschwindigkeit extrahiert, die mit der durch die Geschwindigkeitsberechnungseinheit (14) berechneten Geschwindigkeit verknüpft ist, und indem sie ein Antriebssteuer- bzw. -regelsignal an den Motor (8) ausgibt, sodass sich der Motor (8) mit der extrahierten Drehgeschwindigkeit dreht.

6. Fahrradsteuer- bzw. -regelvorrichtung (1) nach einem der Ansprüche 1 bis 5, wobei
die Gangpositionsschätzeinheit (13) konfiguriert ist, die Gangposition zu schätzen, zumindest wenn die Geschwindigkeit des Elektrofahrrads (2) gleich oder geringer als 6 Kilometer pro Stunde ist.

7. Fahrradsteuer- bzw. -regelvorrichtung (1) nach einem der Ansprüche 1 bis 6, wobei
die Gangpositionsschätzeinheit (13) konfiguriert ist, eine Schätzfunktion bzw. - fähigkeit zum Schätzen der Gangposition selektiv zu aktivieren oder zu deaktivieren.

8. Fahrradsteuer- bzw. -regelvorrichtung (1) nach Anspruch 7, wobei die Gangpositionsschätzeinheit (13) konfiguriert ist, die Schätzfunktion zu aktivieren, wenn die Geschwindigkeit des Elektrofahrrads (2) gleich oder geringer als eine vorgeschriebene Geschwindigkeit ist, und die Schätzfunktion zu deaktivieren, wenn die Geschwindigkeit des Elektrofahrrads (2) höher als die vorgeschriebene Geschwindigkeit ist.

9. Fahrradsteuer- bzw. -regelvorrichtung (1) nach Anspruch 8, wobei die vorgeschriebene Geschwindigkeit 6 Kilometer pro Stunde beträgt.

10. Fahrradsteuer- bzw. -regelvorrichtung (1) nach Anspruch 7, wobei die Gangpositionsschätzeinheit (13) konfiguriert ist, die Schätzfunktion zu aktivieren, wenn sich herausstellt, dass eine Taste zum Schieben des Fahrrads gedrückt ist.

11. Motoreinheit, umfassend:
die Fahrradsteuer- bzw. -regelvorrichtung (1) nach einem der Ansprüche 1 bis 10; und
einen Motor (8), der konfiguriert ist, eine Drehkraft auf das Rad (21) des Elektrofahrrads (2) auszuüben.

12. Antriebseinheit (4), umfassend:
die Motoreinheit (3) nach Anspruch 11; und
eine Batterie bzw. einen Akku (41), die bzw. der konfiguriert ist, die Motoreinheit (3) mit Leistung zu versorgen.

13. Elektrofahrrad (2), umfassend:
die Motoreinheit (3) nach Anspruch 11;
einen Rahmen (7), an dem die Motoreinheit (3) angebracht ist; und
das Rad (21), das an dem Rahmen (7) montiert und konfiguriert ist, sich mit Antriebskraft, die von der Motoreinheit (3) geliefert wird, zu drehen.

14. Programm, das ausgelegt ist, einen Computer zur Verwendung mit einer Geschwindigkeitsdetektionsvorrichtung (5), die konfiguriert ist, einen Drehzustand eines Rades (21) eines Elektrofahrrads (2) zu detektieren, und einer Drehungsdetektionsvorrichtung (6), die konfiguriert ist, in kürzeren Detektionsintervallen als den Detektionsintervallen der Geschwindigkeitsdetektionsvorrichtung (5) einen Drehzustand eines Antriebsstrangs zu detektieren, der konfiguriert ist, das Rad (21) des Elektrofahrrads (2) zu drehen, zu veranlassen, zu fungieren als:
eine Drehfrequenzdetektionseinheit (11), die konfiguriert ist, basierend auf einem Detektionsergebnis durch die Drehungsdetektionsvorrichtung (6) eine Drehfrequenz des Antriebsstrangs zu berechnen;
eine Drehwinkeldetektionseinheit (12), die konfiguriert ist, basierend auf dem Detektionsergebnis durch die Drehungsdetektionsvorrichtung (6) einen Drehwinkel des Antriebsstrangs zu berechnen, wenn sich das Rad (21) um einen vorbestimmten Drehwinkel dreht;
eine Gangpositionsschätzeinheit (13), die konfiguriert ist, wenn der Drehzustand des Rades (21) durch die Geschwindigkeitsdetektionsvorrichtung (5) detektiert wird, eine Gangposition eines Getriebes des Elektrofahrrads (2) basierend auf dem durch die Drehwinkeldetektionseinheit (12) berechneten Drehwinkel zu schätzen; und
eine Geschwindigkeitsberechnungseinheit (14), die konfiguriert ist, eine Geschwindigkeit des Elektrofahrrads (2) basierend auf der durch die Drehfrequenzdetektionseinheit (11) berechneten Drehfrequenz und der durch die Gangpositionsschätzeinheit (13) geschätzten Gangposition zu berechnen.

## Revendications

1. Dispositif de commande de vélo (1) destiné à être utilisé avec un dispositif de détection de vitesse (5) et un dispositif de détection de rotation (6), le dispositif de détection de vitesse (5) étant configuré pour détecter une condition de rotation d'une roue (21) d'un vélo électrique (2), le dispositif de détection de rotation (6) étant configuré pour détecter une condition de rotation d'un groupe motopropulseur à des intervalles de détection plus courts que des intervalles de détection du dispositif de détection de vitesse (5), le groupe motopropulseur étant configuré pour faire tourner la roue (21) du vélo électrique (2),
le dispositif de commande de vélo (1) comprenant :
un module de détection de fréquence de rotation (11) configuré pour calculer, en fonction d'un résultat de détection par le dispositif de détection de rotation (6), une fréquence de rotation du groupe motopropulseur ;
un module de détection d'angle de rotation (12) configuré pour calculer, en fonction du résultat de détection par le dispositif de détection de rotation (6), un angle de rotation du groupe motopropulseur lorsque la roue (21) tourne à un angle de rotation prédéterminé ;
un module d'estimation de position de vitesse (13) configuré pour estimer, lorsque la condition de rotation de la roue (21) est détectée par le dispositif de détection de vitesse (5), une position de vitesse d'une transmission du vélo électrique (2) en fonction de l'angle de rotation calculé par le module de détection d'angle de rotation (12) ; et
un module de calcul de vitesse (14) configuré pour calculer une vitesse du vélo électrique (2) en fonction de la fréquence de rotation calculée par le module de détection de fréquence de rotation (11) et la position de vitesse estimée par le module d'estimation de position de vitesse (13).

2. Dispositif de commande de vélo (1) selon la revendication 1, dans lequel
le groupe motopropulseur inclut un moteur (8), et
le module de détection d'angle de rotation (12) est configuré pour calculer, en fonction du résultat de détection par le dispositif de détection de rotation (6), un angle de rotation du moteur (8) lorsque la roue (21) tourne de l'angle de rotation prédéterminé, en tant qu'angle de rotation du groupe motopropulseur.

3. Dispositif de commande de vélo (1) selon la revendication 2, comprenant en outre un module de commande d'entraînement (15) configuré pour commander le moteur (8) en calculant une vitesse de rotation associée à la vitesse calculée par le module de calcul de vitesse (14) et en émettant un signal de commande d'entraînement vers le moteur (8) de sorte que le moteur (8) tourne à la vitesse de rotation ainsi calculée.

4. Dispositif de commande de vélo (1) selon la revendication 2, comprenant en outre un module de commande d'entraînement (15) configuré pour commander le moteur (8) en émettant un signal de commande d'entraînement vers le moteur (8) de sorte que le moteur (8) tourne à une vitesse de rotation associée à la vitesse calculée par le module de calcul de vitesse (14).

5. Dispositif de commande de vélo (1) selon la revendication 4, comprenant en outre un module de stockage (16) configuré pour stocker des informations concernant une correspondance entre chacune d'une pluralité de vitesses du vélo électrique (2) et une vitesse de rotation associée du moteur (8), dans lequel le module de commande d'entraînement (15) est configuré pour commander le moteur (8) en extrayant, en référence aux informations concernant la correspondant telles que stockées dans le module de stockage (16), la vitesse de rotation associée à la vitesse calculée par le module de calcul de vitesse (14) et en émettant un signal de commande d'entraînement vers le moteur (8) de sorte que le moteur (8) tourne à la vitesse de rotation extraite.

6. Dispositif de commande de vélo (1) selon l'une quelconque des revendications 1 à 5, dans lequel
le module d'estimation de position de vitesse (13) est configuré pour estimer la position de vitesse au moins lorsque la vitesse du vélo électrique (2) est inférieure ou égale à 6 kilomètres par heure.

7. Dispositif de commande de vélo (1) selon l'une quelconque des revendications 1 à 6, dans lequel
le module d'estimation de position de vitesse (13) est configuré pour activer ou désactiver sélectivement une capacité d'estimation consistant à estimer la position de vitesse.

8. Dispositif de commande de vélo (1) selon la revendication 7, dans lequel le module d'estimation de position de vitesse (13) est configuré pour activer la capacité d'estimation lorsque la vitesse du vélo électrique (2) est inférieure ou égale à une vitesse prescrite et désactiver la capacité d'estimation lorsque la vitesse du vélo électrique (2) est supérieure à la vitesse prescrite.

9. Dispositif de commande de vélo (1) selon la revendication 8, dans lequel la vitesse prescrite est de 6 kilomètres par heure.

10. Dispositif de commande de vélo (1) selon la revendication 7, dans lequel le module d'estimation de position de vitesse (13) est configuré pour activer la capacité d'estimation lors de la découverte qu'un bouton d'aide à la marche a été enfoncé.

11. Module de moteur comprenant :
le dispositif de commande de vélo (1) selon l'une quelconque des revendications 1 à 10 ; et
un moteur (8) configuré pour appliquer de la puissance rotative à la roue (21) du vélo électrique (2).

12. Module d'entraînement (4) comprenant :
le module de moteur (3) selon la revendication 11 ; et
une batterie (41) configurée pour fournir de la puissance au module de moteur (3).

13. Vélo électrique (2) comprenant :
le module de moteur (3) selon la revendication 11 ;
un cadre (7) auquel le module de moteur (3) est relié ; et
la roue (21) montée sur le cadre (7) et configurée pour tourner avec de la puissance motrice fournie depuis le module de moteur (3).

14. Programme conçu pour amener un ordinateur destiné à être utilisé avec un dispositif de détection de vitesse (5) configuré pour détecter une condition de rotation d'une roue (21) d'un vélo électrique (2) et un dispositif de détection de rotation (6) configuré pour détecter, à des intervalles de détection plus courts que des intervalles de détection du dispositif de détection de vitesse (5), une condition de rotation d'un groupe motopropulseur configuré pour faire tourner la roue (21) du vélo électrique (2), à fonctionner en tant que :
un module de détection de fréquence de rotation (11) configuré pour calculer, en fonction d'un résultat de détection par le dispositif de détection de rotation (6), une fréquence de rotation du groupe motopropulseur ;
un module de détection d'angle de rotation (12) configuré pour calculer, en fonction du résultat de détection par le dispositif de détection de rotation (6), un angle de rotation du groupe motopropulseur lorsque la roue (21) tourne à un angle de rotation prédéterminé ;
un module d'estimation de position de vitesse (13) configuré pour estimer, lorsque la condition de rotation de la roue (21) est détectée par le dispositif de détection de vitesse (5), une position de vitesse d'une transmission du vélo électrique (2) en fonction de l'angle de rotation calculé par le module de détection d'angle de rotation (12) ; et
un module de calcul de vitesse (14) configuré pour calculer une vitesse du vélo électrique (2) en fonction de la fréquence de rotation calculée par le module de détection de fréquence de rotation (11) et la position de vitesse estimée par le module d'estimation de position de vitesse (13).
